# EUROPÄISCHE PATENTSCHRIFT

(11) **EP 1 658 733 B1**
(45) Veröffentlichungstag und Bekanntmachung des Hinweises auf die Patenterteilung: **18.06.2008**
(21) Anmeldenummer: 04762725.2
(22) Anmeldetag: 30.08.2004
(51) Int. Cl.: H04N 13/00

(54) **Strahlteiler zur Bildtrennung für Autostereoskopie**
Image separating beam splitter for autostereoscopy
Diviseur de faisceau pour la séparation d'images autostéréoscopiques

(30) Priorität: 30.08.2003 DE 10340089
(43) Veröffentlichungstag der Anmeldung: 24.05.2006
(73) Patentinhaber: SeeReal Technologies GmbH, 01307 Dresden (DE)
(72) Erfinder: SCHWERDTNER, Armin, 01259 Dresden (DE)
(86) Internationale Anmeldenummer: PCT/DE2004/001911
(87) Internationale Veröffentlichungsnummer: WO 2005/025238

(56) Entgegenhaltungen:
- EP-A- 0 570 179
- EP-A- 0 786 912
- WO-A-03/019951
- US-A- 5 774 262

## Beschreibung

Die Erfindung betrifft ein optisches Abbildungssystem zur Bildtrennung für ein autostereoskopisches Display, das eine größere Bewegungsfreiheit der Betrachter zulässt, bestehend aus zwei Lentikularen, deren streifenförmige Linsen im Abbildungsstrahlengang parallel in vertikaler Richtung angeordnet sind und sich in Lichtrichtung nach einer Bild-Matrix befinden.

Bei autostereoskopischen Displays ist es erforderlich, die rechten und linken Ansichten der Bildinformationen durch ein optisches Abbildungssystem räumlich zu trennen. In der Regel werden diese optischen Abbildungssysteme als Strahlteiler oder Beamsplitter bezeichnet. Die vorliegende Erfindung bezieht sich auf ein autostereoskopisches Display mit Strahlteiler und der Darstellung von zwei Ansichten.
Bei den Displays mit zwei Ansichten kann in der Regel ein Betrachter nur dann ein übersprechfreies Stereobild empfangen, wenn sich seine Augen sehr genau an vorbestimmten Orten befinden. Diese werden in der Literatur auch als Sweet-Spots bezeichnet.
Wird beispielsweise eine feststehende Barriere mit einem Tastverhältnis von 1:1 als Strahlteiler verwendet, reduziert sich jeder Sweet-Spot auf einen Punkt, oder genauer gesagt, auf eine vertikale Linie. Bewegt sich der Betrachter mit seinen Augen aus diesen Linien heraus, tritt Übersprechen auf. Das rechte Auge sieht Bildanteile, die für das linke Auge bestimmt sind, und umgekehrt. Ähnlich Nachteiliges gilt für die Anwendung anderer Strahlteiler, z.B. einem Lentikular. Das Übersprechen bewirkt zusätzliche pseudoskopische Bilder, die sich von den beabsichtigten Stereobildern durch Tiefenumkehr unterscheiden (US 6 055 013). Sie werden schon bei einer geringen lateralen Abweichung von 1 cm von den Sweet-Spot-Linien deutlich sichtbar und sind für ein gutes Stereosehen nicht zu akzeptieren. Im Gegensatz dazu reduziert sich Übersprechen zwischen den Pixeln bei Monodarstellungen auf Farbfehler oder Verwaschungen, die vom Betrachter eher toleriert werden.
Da Strahlteiler in der Regel periodische Strukturen sind, bilden sie mit den periodischen Strukturen des verwendeten Displays periodische Wiederholungen dieser Sweet-Spots (US 5 991 073). Befinden sich an diesen Stellen Betrachter, können sie ebenfalls stereo sehen. Manche Hersteller bezeichnen daher solche autostereoskopischen Displays als Multi-User-fähig. Alle Betrachter müssen für das Stereosehen ihre festen Positionen exakt einhalten, wobei diese Positionen in der Regel jeweils zwei Augenabstände auseinander liegen. In der Mitte zwischen diesen Positionen wird die Szene pseudoskopisch wahrgenommen. Die feste Positionierung in den Sweet-Spots wird schnell als Belastung empfunden. Eine derartige nachteilige feste Positionierung wird beispielsweise in der durch EP 0 570 179 A3 beschriebenen direktionalen.Anzeigevorrichtung erzielt. In Strahlrichtung von einer Lichtquelle ausgehend, besteht die Vorrichtung aus einem ersten Lentikular, einem Lichtmodulator und zweitem Lentikular. In dieser Vorrichtung ist das Teilungsmaß der Spalten des zweiten Lentikulars größer als jenes des ersten Lentikulars. Im Weiteren steht jeder Spalte des zweiten Lentikulars eine jeweilige Gruppe von Z Spalten des ersten Lentikulars gegenüber, wobei Z eine ganze Zahl größer als Eins ist. Die vom zweiten Lentikular ausgehenden Lichtstrahlen können nur zu einem Teil aus Parallelstrahlen bestehen.
Das Dokument [Börner, R.: "Dreidimensional ohne Brille" in Funkschau, Heft 2/1987, S. 36-39] beschreibt theoretische und praktische Erkenntnisse der Großprojektion räumlicher Bilder in Linsenrasterschirmen, die aus einem Zylinderraster bestehen.

Bei getrackten autostereoskopischen Displays mit Strahlteiler kann sich ein Betrachter bewegen, ohne dass er den Stereoeindruck verliert. Zu dem Zweck wird der Strahlteiler der lateralen Bewegung des Betrachters nachgeführt. Dessen Position wird durch einen Positionsdetektor ermittelt. Es gibt auch autostereoskopische Displays, die neben der lateralen Bewegung den Abstand des Betrachters vom Display tracken. Das wird beispielsweise durch Änderung der Streifenbreite der Parallaxbarriere (Perlin: WO 02109442) oder durch Verschiebung des Fokussierungssystems gegenüber der Bildmatrix (DE 198 36 681) oder durch Nachführen des Beleuchtungssystems (US 6 014 164) erreicht.

Das Erfassen der Position des Betrachters erfordert bei punkt- oder linienförmigen Sweet-Spots die gleiche hohe Genauigkeit wie bei den ungetrackten autostereoskopischen Displays. Außerdem kann bei den getrackten autostereoskopischen Displays meist nur ein Betrachter getrackt werden. Sind mehrere Betrachter vorhanden, müssen alle exakt der lateralen Bewegung des getrackten Betrachters folgen.
Ein unabhängiges Tracking von mehreren Betrachtern wird in dem Patent WO 03/19952 beschrieben. Das darin offenbarte System besteht aus einem Doppellentikular und einem dazwischen angeordneten hochauflösenden Shutter. Über die Größe der Sweet-Spots, die mit diesem System erreicht werden können, sind der Beschreibung keine Aussagen zu entnehmen.
Weitere wesentliche Nachteile bei den getrackten autostereoskopischen Displays aufgrund des sehr kleinen punkt- oder linienförmigen Sweet-Spots sind die erheblichen technischen Anforderungen, die an die präzise Positionsbestimmung der Betrachter sowie an die Genauigkeit der Positionierung des Strahlteilers zu stellen sind. Außerdem bewirken die Latenzzeiten von Positions-Finder und Tracking-System, dass bei schnelleren Bewegungen eines Betrachters stets ein Übersprechen auftritt.

Die aufgeführten Nachteile getrackter und ungetrackter autostereoskopischer Displays mit optischen Bildtrennungssystemen für einen oder mehrere Betrachter sollen mit der vorliegenden Erfindung beseitigt werden.

Aufgabe der Erfindung ist es daher, für autostereoskopische Displays ein optisches Abbildungssystem zur Bildtrennung zu schaffen, dessen Dimensionierung und Positionierung hinreichend große Sichtbarkeitsbereiche in Form ausgedehnter Sweet-Spots für mindestens einen Betrachter sichert.

Diese Aufgabe wird durch die kennzeichnenden Merkmale des Hauptanspruchs gelöst. Zweckmäßige Ausgestaltungen der Erfindung ergeben sich aus den nachfolgenden Ansprüchen.

Der erfindungsgemäße Strahlteiler zur Bildtrennung für Autostereoskopie mit großem Sichtbarkeitsbereich ist in Ausbreitungsrichtung des Lichts einer Bildmatrix nachgeordnet und besteht aus einem ersten Lentikular und einem nachfolgenden zweiten Lentikular. Die Streifenlinsen der Lentikulare sind im Abbildungsstrahlengang in vertikaler Richtung parallel zueinander und zu den Spalten der Bild-Matrix angeordnet. Die Bild-Matrix enthält spaltenförmig paarweise 3D-Bildinformationen für das rechte und linke Auge eines Betrachters.

Erfindungsgemäß weisen die Lentikulare einen Abstand zueinander auf, welcher etwa im Bereich der Brennweite des zweiten Lentikulars liegt, wobei das zweite Lentikular gegenüber dem ersten Lentikular um etwa eine halbe Streifenlinsenbreite versetzt angeordnet ist. Im Weiteren sind die bildinformationstragenden Spalten der Matrix durch das erste Lentikular etwa in doppelter Breite auf die Streifenlinsen des zweiten Lentikulars abbildbar, so dass die aus dem zweiten Lentikular austretenden und die Sweet-Spots erzeugenden Lichtbündel nahezu aus Parallelstrahlen bestehen.

Diese Parallelstrahlenbündel stellen einen .Idealfall dar, wobei es sich auch um leicht divergierende oder konvergierende Strahlenbündel handeln kann. In einer Betrachterebene erzeugen sie Bereiche übersprechungsfreien Sehens, deren laterale Ausdehnung mindestens einem Augenabstand entspricht. Dieser Bereich umfasst den durch den Augenabstand gegebenen Sweet-Spot übersprechungsfreien stereoskopischen Sehens und einen daran anschließenden Bereich, welcher monoskopisches, jedoch übersprechungsfreies Sehen ermöglicht. Vorzugsweise weist der Sweet-Spot-Bereich die maximale Breite auf und entspricht somit dem Augenabstand.

Die genannten Toleranzangaben der Parameter des erfindungsgemäßen Strahlteilers- der Abstand der Lentikulare im Bereich der Brennweite des zweiten Lentikulars, der Versatz der Streifenlinsen des zweiten Lentikulars gegenüber dem ersten Lentikular als halbe Streifenlinsenbreite und die Abbildung der bildinformationstragenden Spalten der Matrix durch das erste Lentikular in doppelter Breite auf die Streifenlinsen des zweiten Lentikulars sind bevorzugte, vorteilhafte und optimierte Parameter, wobei insbesondere durch die stetige Verringerung der Pixelgröße diese Größenverhältnisse durch Fertigungstoleranzen, Verwerfung durch Wärme, oder dergleichen einer größeren Schwankung unterworfen sein können.

Die Fokussierung der Sweet-Spots in die Betrachterebene und den bevorzugten Betrachterabstand wird durch den Einsatz einer Feldlinse unterstützt. In einer weiterführenden Ausführungsform der Erfindung ist hierzu der Strahlteiler mit einer Feldlinse oder einer Kombination von Feldlinsen ausgestattet, die sich in Lichtrichtung nach dem zweiten Lentikular befindet. Eine Feldlinse kann eine zylindrische oder eine sphärische Feldlinse oder eine Kombination dieser Feldlinsen sein, wobei eine sphärische Linse ebenso durch zwei gekreuzte zylindrische Feldlinsen ersetzt sein kann.

In einer bevorzugten Ausführungsform ist die Feldlinse als zylindrische Fresnel-Linse ausgeführt, welche parallel zu den Lentikularen ausgerichtet ist. Vorzugsweise ist das Teilungsmaß, der so genannte Pitch, der Fresnel-Linse zum Teilungsmaß der Bild-Matrix inkommensurabel, damit es keine Stellen im Betrachtungsbereich gibt, wo ein Betrachter mehrere fehleranfällige Spaltenabbildungen gleichzeitig sehen könnte. Das inkommensurable Verhältnis der Teilungsmaße ist beispielsweise durch einen Bruch von Primzahlen beschreibbar. Diese vorteilhafte Ausführung gilt analog für sphärische Feldlinsen.

Ist die Feldlinse als Fresnel-Linse ausgeführt, so zeigt ihre strukturierte Seite vorzugsweise in Richtung des Sweet-Spots. Die Feldlinse kann auch als Holografisches Optisches Element (HOE) ausgebildet sein. In einer weiteren Ausführungsform ist eine Feldlinse in das zweite Lentikular integriert und bildet eine kombinierte, funktionell verbundene Linse.

Durch eine Vergrößerung der Sweet-Spots mit dem erfindungsgemäßen Strahlteiler werden in autostereoskopischen Displays gleichzeitig mehrere Nachteile behoben. Ein Betrachter kann sich im Betrachterraum innerhalb eines Sweet-Spots lateral bewegen, ohne den 3D-Eindruck zu verlieren. Das ist mit maximal einem Augenabstand möglich. Effektiv sinnvoll ist daher ein Sweet-Spot mit der Größe des Augenabstands eines Betrachters, also etwa 65 mm. Es sind auch ausgedehntere Sweet-Spots denkbar. Sie leisten das Gleiche, solange keine Überlappung der Sweet-Spots für das linke und rechte Auge eintritt.

Für ungetrackte autostereoskopische Displays können so vorteilhafterweise laterale und normale, also auf den Abstand des Betrachters zum Display bezogene Bewegungen innerhalb des Sweet-Spots zugelassen werden, ohne dass durch die Positionsveränderung zusätzliches Übersprechen, z.B. Pseudoskopie, auftritt. Damit wird auch die Multi-User-Fähigkeit für ungetrackte Displays verbessert.

Für getrackte Displays können mit einer Vergrößerung der Sweet-Spots durch die Erfindung die sehr hohen Anforderungen an die Positionierung des Strahlteilers in Abhängigkeit von der Betrachterposition erheblich reduziert werden. Dadurch verringern sich auch die Anforderungen an die Genauigkeitsbestimmung des Positionsfinders sowie an die Latenzzeit des Tracking-Systems. Änderungen der Position des Betrachters innerhalb des Sweet-Spots werden ohne Qualitätsänderungen der 3D-Darstellungen toleriert.

Neben der Verringerung der Einstellempfindlichkeit der lateralen Positionierung des Strahlteilers werden auch die Anforderungen an die Genauigkeit des Betrachterabstands zum Display reduziert. Der Betrachter hat jetzt einen gewissen Spielraum zum Display. Er kann sich insgesamt in einem rautenförmigen Bereich bewegen, ohne dass ein Übersprechen auftritt. Ein positiver Effekt ergibt sich auch für die Latenzzeit des Trackingsystems. Sie kann ohne negativen Einfluss auf die 3D-Bildqualität vergrößert werden.

Anhand eines Ausführungsbeispiels wird die Erfindung nachstehend näher erläutert. In den zugehörigen Zeichnungen zeigen
- Fig. 1: nach dem Stand der Technik eine schematische Darstellung der Abbildung eines ungetrackten autostereoskopischen Displays mit Bild-Matrix und konventionellem Strahlteiler;
- Fig. 2: nach dem Stand der Technik eine schematische Darstellung entsprechend Fig.1, wobei der Betrachter seine Position lateral geändert hat;
- Fig. 3: eine schematische Darstellung der Abbildung eines ungetrackten autostereoskopischen Displays mit Bild-Matrix und einem erfindungsgemäßen Strahlteiler;
- Fig. 4: eine schematische Darstellung entsprechend Fig. 3, wobei der Betrachter seine Position lateral geändert hat;
- Fig. 5: eine schematische Darstellung der Entstehung eines Sweet-Spots für beide Augen eines Betrachters mit dem erfindungsgemäßen Strahlteiler;
- Fig. 6: eine schematische Darstellung der Ausdehnung eines Sweet-Spots für das rechte Auge eines Betrachters mit dem erfindungsgemäßen Strahlteiler;
- Fig. 7: eine schematische Darstellung der Sweet-Spot-Bereiche, in denen sich ein Betrachter maximal bewegen kann, ohne den Stereoeindruck zu verlieren;
- Fig. 8: eine schematische Darstellung einer weiteren Ausführung des Strahlteilers mit reduzierten Teilungsmaßen;
- Fig. 9: eine schematische Darstellung der Kombination der Lentikulare L1 und L2 zu einer kompakten Einheit;
- Fig. 10: eine schematische Darstellung einer weiteren Ausführungsform;
- Fig.11: eine schematische Darstellung einer weiteren Ausführungsform entsprechend Fig. 9; und
- Fig. 12: eine Ausführung des Strahlteilers mit einer Feldlinse.

### Alle Darstellungen sind als Draufsichten gezeichnet

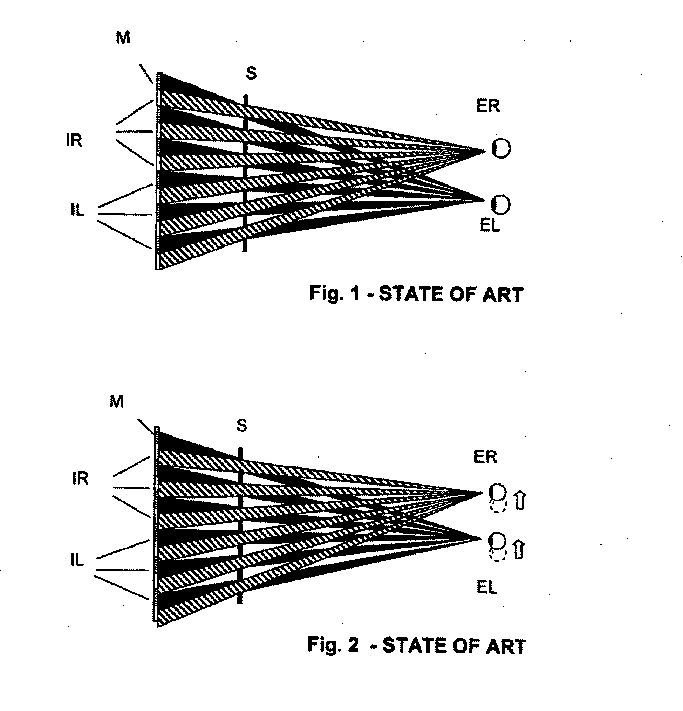

Entsprechend dem Stand der Technik wird in den Figuren 1 und 2 die Abbildung für ein ungetracktes autostereoskopisches Display mit einem konventionellen Strahlteiler schematisch dargestellt.

Fig. 1 zeigt eine Darstellung der optischen Abbildung eines ungetrackten autostereoskopischen Displays mit einer Bild-Matrix und einem konventionellem Strahlteiler nach dem Stand der Technik.
In Lichtrichtung sind in Fig. 1 aufeinander folgend eine Bildmatrix M, ein konventioneller Strahlteiler S und das linke Auge EL und das rechte Auge ER eines Betrachters dargestellt. In der Bild-Matrix M sind ein rechtes und ein linkes Stereobild IR und IL spaltenweise alternierend verschachtelt. Der die Bildinformationen tragende Sweet-Spot hat hier die Ausdehnung eines Punkts oder einer vertikalen Linie. Befindet sich der Betrachter mit seinen Augen exakt in den Sweet-Spots, sieht er ohne Übersprechen stereo. Das rechte Auge kann nur das rechte Stereobild, das linke Auge nur das linke Stereobild sehen.

Fig. 2 zeigt eine schematische - Darstellung entsprechend Fig. 1, wobei der Betrachter seine Position lateral geändert hat - nach dem Stand der Technik Der Betrachter hat sich gegenüber Fig.1 um ein Stück nach rechts bewegt, wobei die frühere Augenposition gestrichelt dargestellt ist. Mit seinem rechten Auge ER sieht er zusätzlich einen Teil des linken Stereobilds IL und mit seinem linken Auge EL einen Teil des rechten Stereobilds IR. Diese Ansichten führen zu einer pseudoskopischen 3D-Darstellung, in der der Tiefeneindruck vertauscht ist. Das pseudoskopische Bild ist dem verbleibenden und abgeschwächten Stereobild überlagert. Es wird daher wesentlich deutlicher wahrgenommen als ein Übersprechen von Pixeln beim normalen 2D-Betrieb.

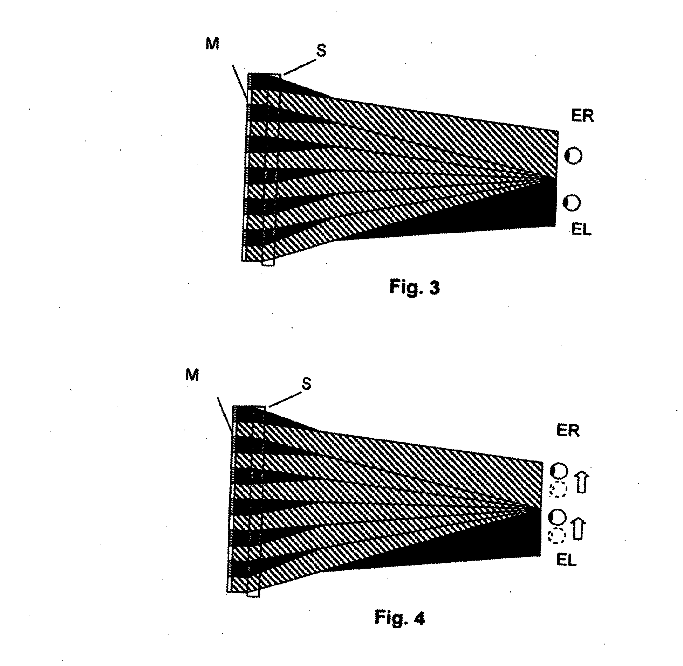

Die beiden nachfolgenden Figuren 3 und Fig. 4 veranschaulichen die Abbildung für ein autostereoskopisches Display mit einem erfindungsgemäßen Strahlteiler.

Fig. 3 zeigt eine schematische Darstellung der Abbildung eines ungetrackten autostereoskopischen Displays mit einer Bild-Matrix und einem erfindungsgemäßen Strahlteiler. Hier ist der Bild-Matrix M ein erfindungsgemäßer Strahlteiler S nachgeordnet, der im Vergleich zum konventionellen Strahlteiler eine vergrößerte laterale Ausdehnung der Sweet-Spots im Bereich beider Betrachteraugen hervorruft.

Fig.4 zeigt eine schematische Darstellung entsprechend Fig.3, wobei der Betrachter seine Position lateral geändert hat. Hierin ist anhand der Richtungspfeile zu erkennen, dass sich der Betrachter ein Stück nach rechts bewegt hat, ohne den Bereich des Sweet-Spots zu verlassen und dadurch den Stereoeindruck zu verlieren. Ebenso kann er sich um den gleichen Abstand nach links bewegen. Durch die erfindungsgemäß hervorgerufenen vergrößerten Sweet-Spot-Bereiche ist der Betrachter nicht mehr an ein starres und unbequemes Halten seiner Position gebunden.

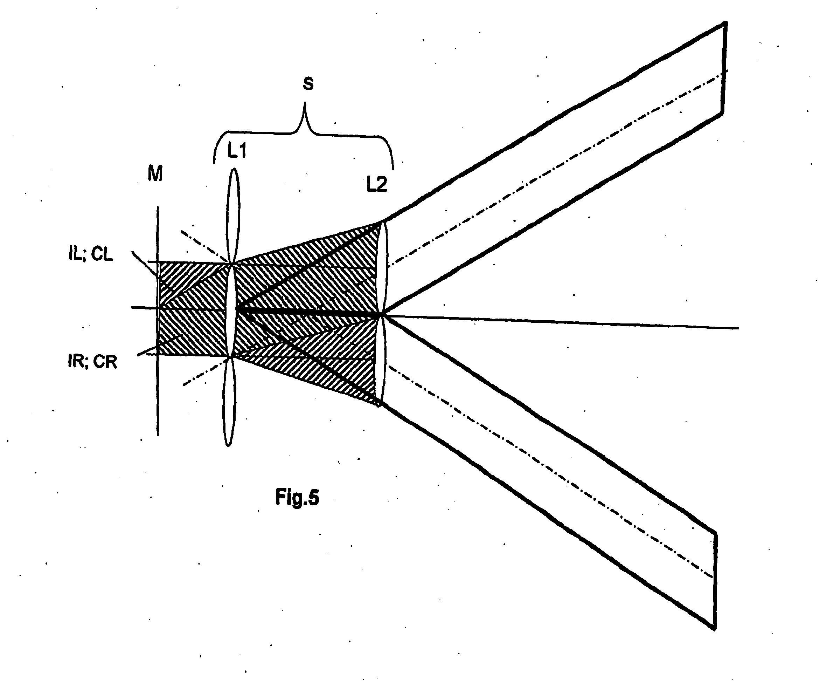

Fig. 5 zeigt eine schematische Darstellung der Entstehung eines Sweet-Spots für beide Augen eines Betrachters mit dem erfindungsgemäßen Strahlteiler.
In dieser Figur ist der Strahlteiler S detaillierter dargestellt. Er ist zwischen dem Betrachter und der Bildmatrix M angeordnet. Die Bildmatrix M enthält spaltenförmig paarweise 3D-Bildinformationen für das rechte und linke Auge eines Betrachters.
Der Strahlteiler S besteht aus zwei Lentikularen L1 und L2. Die parallelen streifenförmigen Linsen beider Lentikulare L1 und L2 sind parallel zueinander im Strahlengang in vertikaler Richtung angeordnet. Der Abstand der Lentikulare beträt etwa die Brennweite des zweiten Lentikulars L2.
Ferner sind die Lentikulare L1 und L2 um etwa ein halbes Teilungsmaß, also eine halbe Streifenlinsenbreite, gegeneinander versetzt. Die rechten und linken Spalten der Bild-Matrix M werden durch das erste Lentikular L1 vollständig auf die entsprechenden Linsen des zweiten Lentikulars L2 abgebildet.
Ein Linsenelement des Lentikulars L2 ist voll mit dem Bild der entsprechenden Spalte der Bildmatrix M ausgefüllt. Die Streifenlinsen der Lentikulare L1 und L2 sind somit in dieser bevorzugten Ausführungsform zwei Pixel- bzw. Spaltenbreiten breit, wobei die Streifenlinsen von L1 in dieser und in den zwei nachfolgenden Figuren jeweils zwei Pixelspalten der Bildmatrix M überdecken. Die Strahlenbündel verlassen das Lentikular L2 vorzugsweise nahezu parallel, zu erkennen an der Hervorhebung des Strahlenverlaufs in der Darstellung.

Die Merkmale des erfindungsgemäßen Strahlteilers - der Abstand der Lentikulare im Bereich der Brennweite des zweiten Lentikulars, der Versatz der Streifenlinsen des zweiten Lentikulars gegenüber dem ersten Lentikular als halbe Streifenlinsenbreite und die Abbildung der bildinformationstragenden Spalten der Matrix durch das erste Lentikular in doppelter Breite auf die Streifenlinsen des zweiten Lentikulars - können in einer verallgemeinerten Sichtweise als System zweiter Ordnung bezeichnet werden. Der Gedanke der Erfindung wird auch bei sinngemäßen Systemen höherer Ordnung oder deren Mischformen nicht verlassen.

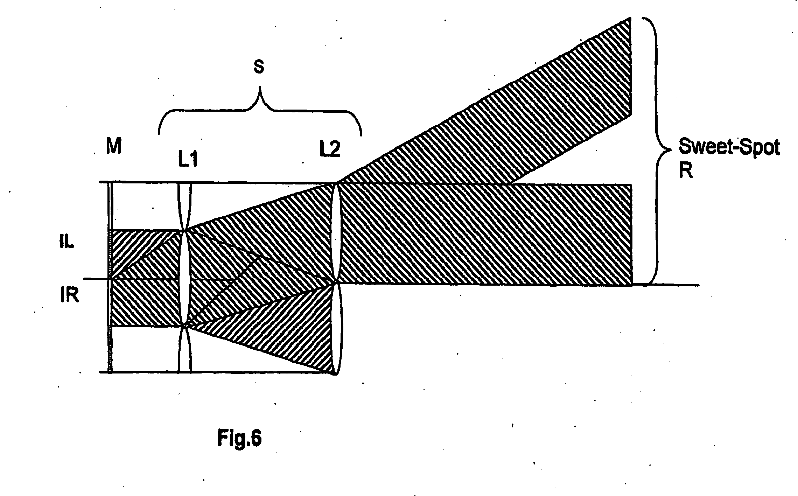

Fig. 6 zeigt bei einer zu Fig. 5 analogen Anordnung des Strahlteilers die Entstehung eines Sweet-Spots für das rechte Auge eines Betrachters. Eine rechte informationstragende Spalte CR mit dem Bild IR wird durch das erste Lentikular L1 auf das zweite Lentikular L2 abgebildet und verlässt das Lentikular L2 als nahezu paralleles Strahlenbündel in Richtung auf das rechte Betrachterauge. Das. Parallelstrahlenbündel stellt einen Idealfall dar, es kann sich hierbei auch um leicht divergierende oder konvergierende Strahlenbündel handeln. Jeder einzelne Punkt einer Spalte im Lentikular L1 hat denselben Bildinhalt. Damit trägt auch jeder Parallelstrahl, der einer entsprechenden Spalte zugeordnet werden kann und das Lentikular L2 verlässt, deren Inhalt.

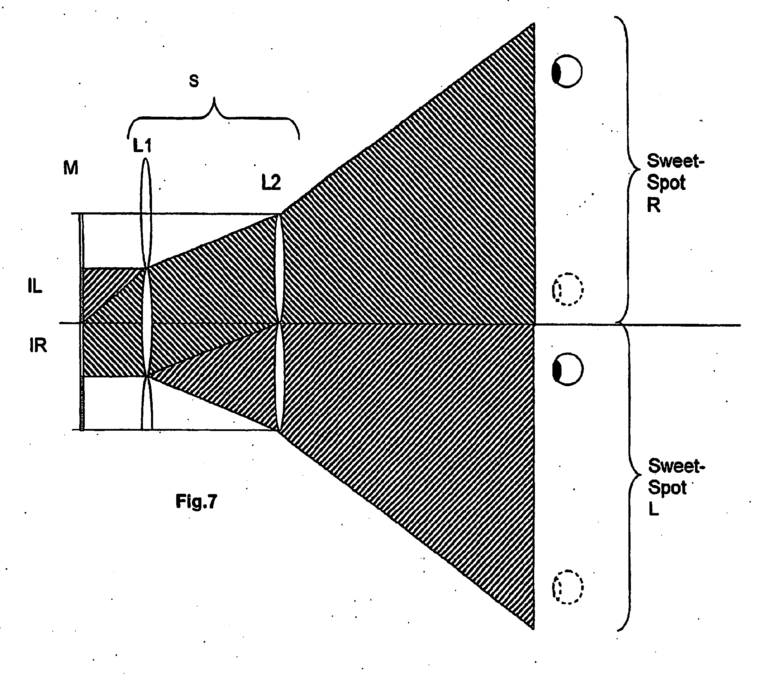

Fig. 7 zeigt eine schematische Darstellung der Sweet-Spot-Bereiche, in denen sich ein Betrachter maximal bewegen kann, ohne den Stereoeindruck zu verlieren. Es ist veranschaulicht, welche Raumbereiche insgesamt durch die Verwendung des erfindungsgemäßen Strahlteilers S mit einem Sweet-Spot für beide Betrachteraugen beaufschlagt werden. Die gestrichelt gezeichneten Augen ER und EL des Betrachters zeigen, wie weit er sich im Stereobereich bewegen kann. Ein Sweet-Spot-Bereich, welcher in der Betrachterebene größer als der Augenabstand ist, besteht aus dem durch den Augenabstand gegebenen Bereich übersprechungsfreien stereoskopischen Sehens und einem daran anschließenden Bereich, welcher monoskopisches, jedoch übersprechungsfreies Sehen ermöglicht. Vorzugsweise ist der Sweet-spot maximal und beträgt einen Augenabstand. Die Vergrößerung der Sweet-Spots betrifft vorzugsweise Displays im Landscape-Format, wobei die Farbsubpixel der Bildmatrix vertikal oder horizontal aufgespalten sind.

In den Fig. 5 bis 7 sind die Teilungsmaße der Lentikulare L1 und L2 gleich und entsprechen dem doppelten Teilungsmaß der Bild-Matrix M. In einer weiterführenden Ausführungsform kann das Teilungsmaß der Lentikulare L1 und/oder L2 verändert werden.

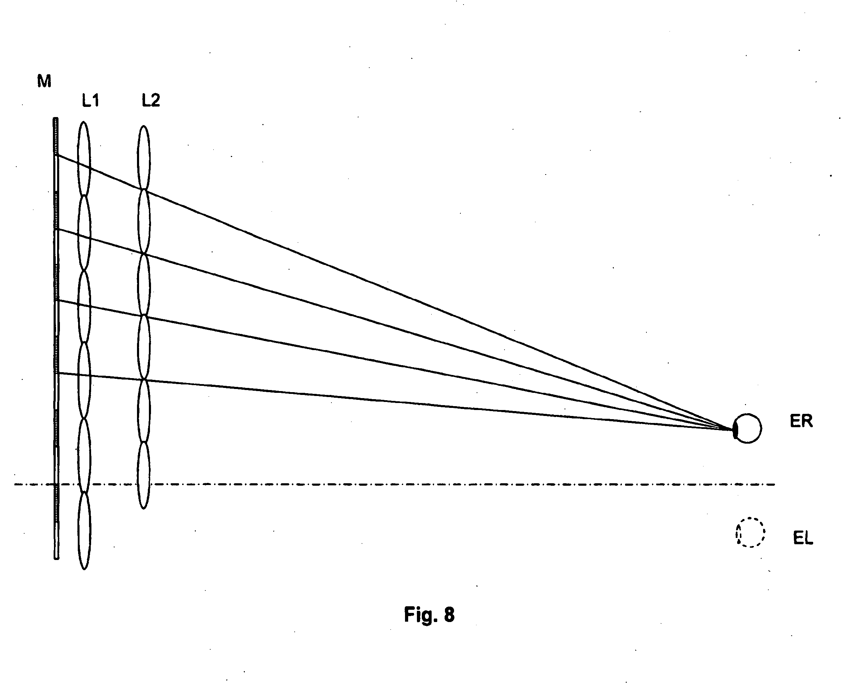

Fig. 8 zeigt .einen Strahlteiler mit reduzierten Teilungsmaßen, um demzufolge einen Feldlinseneffekt zu erzeugen. Die Teilungsmaße der Lentikulare L1 und L2 sind, bezogen auf das Teilungsmaß der Bildmatrix M perspektivisch um den Betrachterabstand verkürzt. Der Betrachterabstand ist in einer bevorzugten Variante bestimmt durch den Halbierungspunkt des Augenabstands im bevorzugten Betrachtungsabstand und beispielsweise der Oberkante des betrachteten Pixels der Bildmatrix M. Eine Definition durch die Auslenkung des Pixels von der horizontalen Symmetrieachse der Bildmatrix M ist ebenso möglich. In einer weiteren Ausführung bleibt das Teilungsmaß des ersten Lentikulars L1 konstant und die Reduktion der Teilungsmaße betrifft nur das zweite Lentikular L2. Ein nichtlinearer Zusammenhang der Teilungsmaße, beziehungsweise die Aufnahme eines Korrekturterms in die Berechnung der Teilungsmaße, ist insbesondere bei größeren autostereoskopischen Displays oder speziellen Einsatzgebieten denkbar.

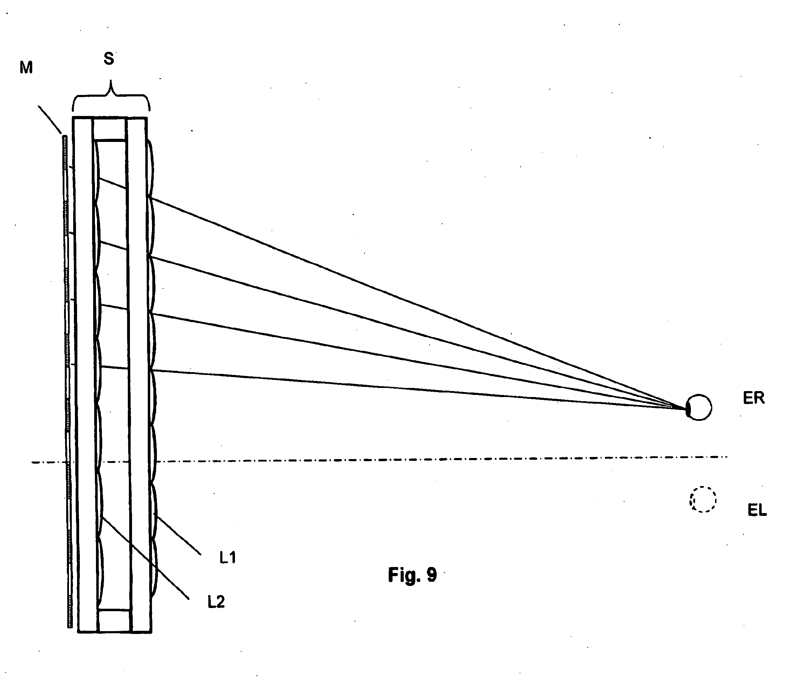

Die Kombination der Lentikulare L1 und L2 des Strahlteilers S zu einer kompakten Baueinheit erläutert Fig. 9. Beide Substrate, die die Lentikulare tragen, sind fest miteinander verbunden, zum Beispiel durch Verklebung. Der dadurch eingetretene Vorteil liegt in einer separaten Justage der beiden Lentikulare zueinander sowie in der Verringerung der Zahl der optischen Einzelelemente. Die Lentikulare (L1) und (L2) können ebenso auf demselben Substrat aufgebracht sein.

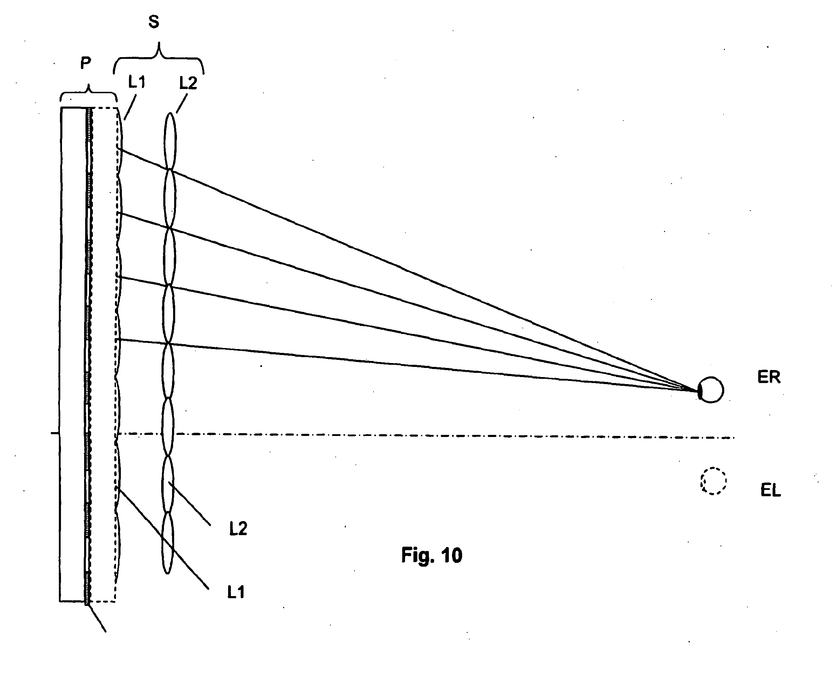

Fig. 10 veranschaulicht eine weitere Ausführungsform der Erfindung. Das Lentikular L1 des Strahlteilers ist hier direkt auf das Panel-Glas P der Bildmatrix M aufgebracht. Durch diese Konstruktion ergibt sich vorteilhaft, dass eine Panel-Oberfläche als Reflexionsfläche wegfällt.

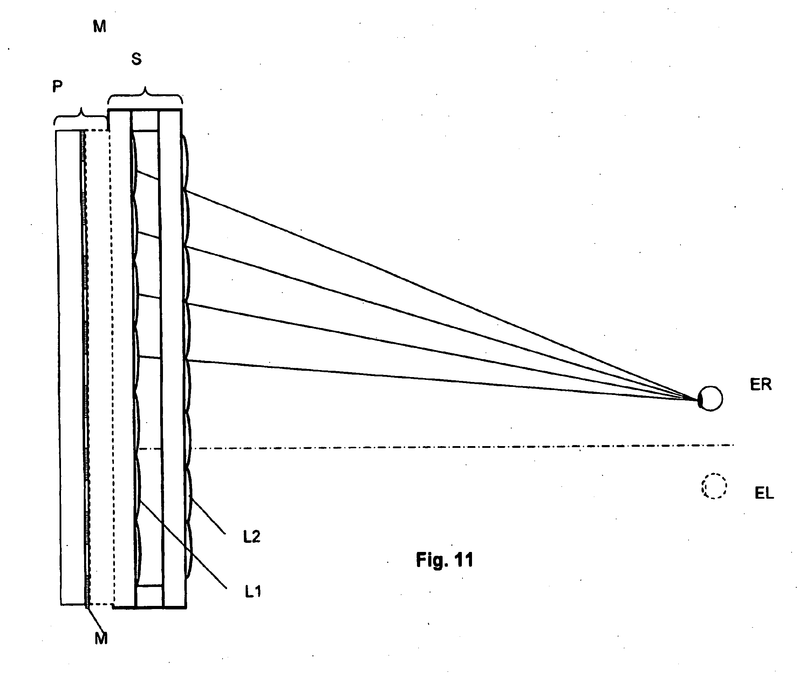

Eine andere Variante der Erfindung sieht gemäß Fig. 11 vor, dass die gesamte kompakte Strahlteiler-Einheit S aus Fig. 9 direkt auf das Panel-Glas P aufgebracht wird. Das kann durch Verkleben oder andere geeignete Verbindungsverfahren geschehen, die eine feste Verbindung zulassen. Damit werden ebenfalls eine Verringerung der Anzahl der optischen Elemente und gleichzeitig eine Verringerung der Reflexionsflächen erreicht.

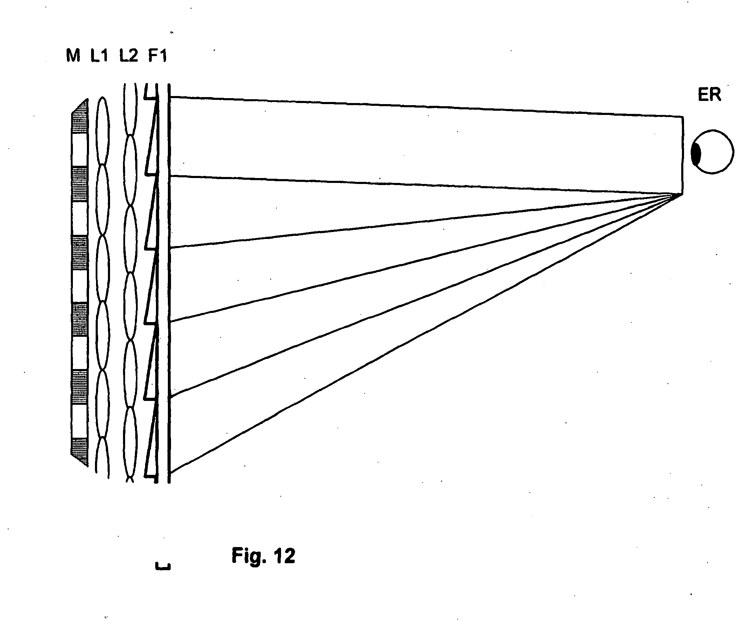

Fig. 12 zeigt eine Ausführung des Strahlteilers mit einer Feldlinse F1. In dieser bevorzugten Ausführungsform ist die Feldlinse F1 als zylindrische Fresnel-Linse ausgeführt, welche parallel zu den Streifenlinsen der Lentikel L1 1 und L2 ausgerichtet ist. Die Teilungsmaße der Lentikulare L1 und L2 sind analog zu Fig. 5 konstant. Wie die Darstellung zeigt, ist das Teilungsmaß der Fresnel-Linse F1 zum Teilungsmaß der Bild-Matrix M inkommensurabel, damit es keine Stellen im Betrachtungsbereich gibt, wo ein Betrachter mehrere, durch das Teilungsmaß der Feldlinse verursachten, fehleranfällige Spaltenabbildungen gleichzeitig sehen könnte. Das inkommensurable Verhältnis der Teilungsmaße, hier 13:17, leitet sich am einfachsten von einem Quotienten zweier Primzahlen ab. Die Feldlinse F1 ist hier zum zweiten Lentikular L2 zeigend ausgerichtet und ist an ihrer Lichtaustrittseite plan. Die Feldlinse ist an dieser Seite geeignet beschichtet und dient als Deckpanel des autostereoskopischen Displays. Eine Kombination von Feldlinsen ist vorzugsweise als einteilige Baueinheit ausgeführt und kann hier auch das zweite Lentikular L2 beinhalten.

Durch eine Vergrößerung des Sweet-Spots mit den erfindungsgemäßen Mitteln werden Anwendungen mit autostereoskopischen Displays benutzerfreundlicher. Ihr Einsatz kann im Multimediabereich, 3D-TV, CAD- und Militärbereich, bei Spielen, Handys, Handhelds oder dergleichen. ähnlichen, hier nicht näher bezeichneten Bereichen erfolgen.
Von der Erfindung werden auch Anwendungsmöglichkeiten erfasst, die hier nicht aufgeführt sind, denen aber das erfindungsgemäße Prinzip zugrunde liegt.

### Liste der verwendeten Bezugszeichen

- M: Bildmatrix
- CR: rechte Spalten der Bildmatrix
- CL: linke Spalten der Bildmatrix
- S: Strahlteiler
- L1: erstes Lentikular
- L2: zweites Lentikular
- IR: Rechtes Bild
- IL: Linkes Bild
- SSR: rechter Sweet-Spot
- SSL: linker Sweet-Spot
- ER: rechtes Auge
- EL: linkes Auge
- V: Betrachter
- F1: Feldlinse

## Patentansprüche

1. Strahlteiler zur Bildtrennung für Autostereoskopie mit großem Sichtbarkeitsbereich, bestehend in Ausbreitungsrichtung des Lichts aus einer Bild-Matrix (M), deren Spalten (CR,CL) paarweise Bildinformationen für das rechte und linke Auge eines Betrachters enthalten, und einem nachfolgenden ersten Lentikular (L1) und einem zweiten Lentikular (L2), deren Streifenlinsen jeweils im Abbildungsstrahlengang in vertikaler Richtung parallel zueinander und zu den Spalten der Bild-Matrix (M) angeordnet sind, **dadurch gekennzeichnet, dass** die Streifenlinsenbreite der Lentikulare (L1) und (L2) gleich sind und der doppelten Spaltenbreite der Bild-Matrix (M) entsprechen, die Lentikulare (L1) und (L2) einen Abstand zueinander aufweisen, welcher der Brennweite des zweiten Lentikulars (L2) entspricht, die Lentikulare (L1, L2) um eine halbe Streifenlinsenbreite gegeneinander versetzt angeordnet sind, und die Lentikulare so dimensioniert und angeordnet sind, dass das erste Lentikular (L1) die Spalten der Bild-Matrix (M) in doppelter Breite auf die Streifenlinsen des zweiten Lentikulars (L2) abbildet und das vom zweiten Lentikular (L2) ausgehende Lichtbündel annähernd aus Parallelstrahlen besteht, wodurch in der Betrachterebene Sweet-Spots erzeugt werden, deren laterale Ausdehnung in dieser Ebene mindestens einem Augenabstand entspricht.

2. Strahlteiler zur Bildtrennung nach Anspruch 1, **dadurch gekennzeichnet, dass** die Lentikulare (L1) und (L2) als einteilige Baueinheit ausgeführt sind.

3. Strahlteiler zur Bildtrennung nach Anspruch 1, **dadurch gekennzeichnet, dass** die Lentikulare (L1) und (L2) auf demselben Substrat aufgebracht sind.

4. Strahlteiler zur Bildtrennung nach einem oder mehreren der vorstehenden Ansprüche, **dadurch gekennzeichnet, dass** das erste Lentikular (L1) direkt auf das Panel-Glas der Bild-Matrix (M) aufgebracht ist.

5. Strahlteiler zur Bildtrennung nach Anspruch 2, **dadurch gekennzeichnet, dass** die einteilige Baueinheit aus dem Lentikular (L1) und (L2) mit dem Panel-Glas der Bild-Matrix (M) fest verbunden ist.

6. Strahlteiler zur Bildtrennung nach einem oder mehreren der vorstehenden Ansprüche 1 bis 5, **dadurch gekennzeichnet, dass** dem Lentikular (L2) nachfolgend eine Feldlinse (F1) oder eine Kombination von Feldlinsen angeordnet ist.

7. Strahlteiler zur Bildtrennung nach Anspruch 6, **dadurch gekennzeichnet, dass** eine Feldlinse (F1) oder eine Kombination von Feldlinsen aus zylindrischen oder sphärischen Feldlinsen besteht.

8. Strahlteiler zur Bildtrennung nach Anspruch 7, **dadurch gekennzeichnet, dass** eine sphärische Feldlinse als Kombination von zwei gekreuzten zylindrischen Feldlinsen ausgeführt ist.

9. Strahlteiler zur Bildtrennung **nach** einem oder mehreren der Ansprüche 6 bis 8, **dadurch gekennzeichnet, dass** eine oder mehrere Feldlinsen als Fresnel-Linsen ausgeführt sind.

10. Strahlteiler zur Bildtrennung nach Anspruch 6 bis 9, **dadurch gekennzeichnet, dass** eine oder mehrere in einem Teilungsmaß strukturierte Feldlinsen ein Teilungsmaß aufweisen, welches zum Teilungsmaß der Bild-Matrix (M) inkommensurabel ist.

11. Strahlteiler zur Bildtrennung nach Anspruch 10, **dadurch gekennzeichnet, dass** eine Feldlinse oder mehrere Feldlinsen ein Teilungsmaß aufweisen, welches zum Teilungsmaß der Bild-Matrix (M) inkommensurabel ist, und das Verhältnis der Teilungsmaße durch den Quotienten zweier Primzahlen beschrieben ist.

12. Strahlteiler zur Bildtrennung nach Anspruch 11, **dadurch gekennzeichnet, dass** eine oder mehrere Feldlinsen (F1) als zylindrische und parallel zu den Streifenlinsen der Lentikulare (L1,L2) gerichtete Fresnel-Linsen ausgeführt sind, deren Teilungsmaße zum Teilungsmaß der Bild-Matrix (M) inkommensurabel sind.

13. Strahlteiler zur Bildtrennung nach Anspruch 6, **dadurch gekennzeichnet, dass** eine Feldlinse oder eine Kombination von Feldlinsen als holografische optische Elemente ausgeführt ist.

14. Strahlteiler zur Bildtrennung nach einem der vorstehenden Ansprüche 9 bis 12, **dadurch gekennzeichnet, dass** eine Feldlinse (F1) mit ihrer strukturierten Oberfläche zum Lentikular (L2) zeigend ausgerichtet ist und deren plane Oberflächefläche mit einer Beschichtung versehen ist zur verwendung als Deckpanel eines autostereoskopischen Displays.

15. Strahlteiler zur Bildtrennung nach einem der vorstehenden Ansprüche 9 bis 12, **dadurch gekennzeichnet, dass** das Lentikular (L2) und die Feldlinse (F1) als einteilige Baueinheit ausgeführt sind.

## Claims

1. Beam splitter for image separation in autostereoscopic applications with large viewing zone, comprising in the direction of light propagation an image matrix (M), whose columns (CR, CL) contain pair-wise image information for the right and left eyes of an observer, a first lenticular (L1) and a second lenticular (L2), whose strip lenses are arranged in the optical path vertically oriented and parallel to each other and to the columns of the image matrix (M), **characterised in that** the width of the strip lenses of the lenticulars (L1) and (L2) is equal and identical to twice the width of the columns of the image matrix (M), that distance between the lenticulars (L1) and (L2) is identical to the focal length of the second lenticular (L2), that the lenticulars (L1, L2) are disposed at an offset of about half the width of the strip lenses, and that the lenticulars are dimensioned and arranged such that the first lenticular (L1) projects the columns of the image matrix (M) at doubled width on to the strip lenses of the second lenticular (L2), and that the bundle of rays emitted by the second lenticular (L2) comprises of almost parallel rays, such that sweet spots are generated in the observer plane, where the lateral extent of the sweet spots in this plane is at least as large as an eye separation.

2. Beam splitter for image separation according to claim 1, **characterised in that** the lenticulars (L1) and (L2) are combined to form a single-piece unit.

3. Beam splitter for image separation according to claim 1, **characterised in that** the lenticulars (L1) and (L2) are attached to the same substrate.

4. Beam splitter for image separation according to one or more of the preceding claims, **characterised in that** the first lenticular (L1) is attached directly to the glass panel of the image matrix (M).

5. Beam splitter for image separation according to claim 2, **characterised in that** the single-piece unit of the lenticulars (L1) and (L2) is inseparably joined to the glass panel of the image matrix (M).

6. Beam splitter for image separation according to one or more of the preceding claims 1 to 5, **characterised in that** a field lens (F1) or a combination of field lenses is disposed behind the lenticular (L2).

7. Beam splitter for image separation according to claim 6, **characterised in that** a field lens (F1) or a combination of field lenses comprises cylindrical or spherical field lenses.

8. Beam splitter for image separation according to claim 7, **characterised in that** a spherical field lens is represented by a combination of two crossed cylindrical field lenses.

9. Beam splitter for image separation according to one or more of the claims 6 to 8, **characterised in that** one or multiple field lenses are represented by Fresnel lenses.

10. Beam splitter for image separation according to claims 6 to 9, **characterised in that** one or multiple field lenses are structured with a pitch that is incommensurable to the pitch of the image matrix (M).

11. Beam splitter for image separation according to claim 10, **characterised in that** one or multiple field lenses exhibit a pitch that is incommensurable to the pitch of the image matrix (M), where the ratio of the two pitches is described by the quotient of two prime numbers.

12. Beam splitter for image separation according to claim 11, **characterised in that** one or multiple field lenses (F1) are cylindrical Fresnel lenses which are oriented parallel to the strip lenses of the lenticulars (L1, L2) and whose pitches are incommensurable to the pitch of the image matrix (M).

13. Beam splitter for image separation according to claim 6, **characterised in that** a field lens or a combination of field lenses is represented by holographic optical elements.

14. Beam splitter for image separation according to one of the preceding claims 9 to 12, **characterised in that** a field lens (F1) is disposed with its structured side facing the lenticular (L2), and that its plane surface is given a coating so that it can serve as a covering panel of an autostereoscopic display.

15. Beam splitter for image separation according to one of the preceding claims 9 to 12, **characterised in that** the lenticular (L2) and the field lens (F1) are combined to form a single-piece unit.

## Revendications

1. Diviseur de faisceau pour la séparation d'image pour l'autostéréoscopie avec une grande plage de visibilité, comprenant dans le sens de propagation de la lumière à partir d'une matrice d'image (M), dont les colonnes (CR, CL) contiennent par paires des informations d'image pour l' oeil droit et l'oeil gauche d'un observateur, et un premier système lenticulaire (L1) consécutif et un second système lenticulaire (L2), dont les lentilles en bande sont disposées respectivement dans la trajectoire du faisceau de reproduction dans la direction verticale parallèlement entre elles et aux colonnes de la matrice d'image (M), **caractérisé en ce que** la largeur des lentilles en bandes des systèmes lenticulaires (L1) et (L2) sont identiques et correspondent à la double largeur de colonne de la matrice d'image (M), les systèmes lenticulaires (L1) et (L2) présentent un espacement qui correspond à la focale du second système lenticulaire (L2), les systèmes lenticulaires (L1, L2) sont disposés avec un décalage d'une demi-largeur de lentille en bande les uns par rapport aux autres, et les systèmes lenticulaires sont dimensionnés et disposés de telle sorte que le premier système lenticulaire (L1) reproduit les colonnes de la matrice d'image (M) dans une double largeur sur les lentilles en bande du second système lenticulaire (L2) et le faisceau de lumière partant du second système lenticulaire (L2) se compose approximativement de faisceaux parallèles, de sorte que des sweet-spots, dont l'extension latérale correspond dans ce plan à au moins à un espacement d'yeux, sont générés dans le plan de l'observateur.

2. Diviseur de faisceau pour la séparation d'image selon la revendication 1, **caractérisé en ce que** les systèmes lenticulaires (L1) et (L2) sont réalisés sous forme d'un module monobloc.

3. Diviseur de faisceau pour la séparation d'image selon la revendication 1, **caractérisé en ce que** les systèmes lenticulaires (L1) et (L2) sont appliqués sur le même substrat.

4. Diviseur de faisceau pour la séparation d'image selon l'une ou plusieurs des revendications précédentes, **caractérisé en ce que** le premier système lenticulaire (L1) est appliqué directement sur le verre de panneau de la matrice d'image (M).

5. Diviseur de faisceau pour la séparation d'image selon la revendication 2, **caractérisé en ce que** le module monobloc des systèmes lenticulaires (L1) et (L2) est relié de façon fixe au verre de panneau de la matrice d'image (M).

6. Diviseur de faisceau pour la séparation d'image selon l'une ou plusieurs des revendications précédentes 1 à 5, **caractérisé en ce qu'**une lentille de champ (F1) ou une combinaison de lentilles de champ est disposée à la suite du système lenticulaire (L2).

7. Diviseur de faisceau pour la séparation d'image selon la revendication 6, **caractérisé en ce qu'**une lentille de champ (F1) ou une combinaison de lentilles de champ se compose de lentilles de champ cylindriques ou sphériques.

8. Diviseur de faisceau pour la séparation d'image selon la revendication 7, **caractérisé en ce qu'**une lentille de champ sphérique est réalisée sous forme de combinaison de deux lentilles de champ cylindriques croisées.

9. Diviseur de faisceau pour la séparation d'image selon l'une ou plusieurs des revendications 6 à 8, **caractérisé en ce qu'**une ou plusieurs lentilles de champ sont réalisées sous forme de lentilles de Fresnel.

10. Diviseur de faisceau pour la séparation d'image selon les revendications 6 à 9, **caractérisé en ce qu'**une ou plusieurs lentilles de champ structurées dans une cote d'écartement présentent une cote d'écartement qui est incommensurable par rapport à la cote d'écartement de la matrice d'image (M).

11. Diviseur de faisceau pour la séparation d'image selon la revendication 10, **caractérisé en ce qu'**une lentille de champ ou plusieurs lentilles de champ présentent une cote d'écartement qui est incommensurable par rapport à la cote d'écartement de la matrice d'image (M), et le rapport des cotes d'écartement est décrit par le quotient de deux nombres primaires.

12. Diviseur de faisceau pour la séparation d'image selon la revendication 11, **caractérisé en ce qu'**une ou plusieurs lentilles de champ (F1) sont réalisées sous forme de lentilles de Fresnel cylindriques et orientées parallèlement aux lentilles en bande des systèmes lenticulaires (L1, L2), dont les cotes d'écartement sont incommensurables par rapport à la cote d'écartement de la matrice d'image (M).

13. Diviseur de faisceau pour la séparation d'image selon la revendication 6, **caractérisé en ce qu'**une lentille de champ ou une combinaison de lentilles de champ est réalisée sous forme d'éléments optiques holographiques.

14. Diviseur de faisceau pour la séparation d'image selon l'une des revendications précédentes 9 à 12, **caractérisé en ce qu'**une lentille de champ (F1) avec sa surface structurée est orientée vers le système lenticulaire (L2) et dont la surface superficielle plane est dotée d'un revêtement pour l'utilisation comme panneau de recouvrement d'un dispositif d'affichage autostéréoscopique.

15. Diviseur de faisceau pour la séparation d'image selon l'une des revendications 9 à 12 précédentes, **caractérisé en ce que** le système lenticulaire (L2) et la lentille de champ (F1) sont réalisés sous forme de module monobloc.
